# EUROPEAN PATENT SPECIFICATION

(11) **EP 3 028 875 B1**
(45) Date of publication and mention of the grant of the patent: **16.01.2019**
(21) Application number: 14831198.8
(22) Date of filing: 11.07.2014
(51) Int. Cl.: B60C 11/13, B60C 11/04, B60C 11/03

(54) **AIRCRAFT TIRE**
FLUGZEUGREIFEN
PNEU D'AVION

(30) Priority: 02.08.2013 JP 2013161681
(43) Date of publication of application: 08.06.2016
(73) Proprietor: Bridgestone Corporation, Tokyo 104-8340 (JP)
(72) Inventor: YAMAGUCHI, Suguru, Tokyo 104-8340 (JP)
(74) Representative: Oxley, Robin John George
(86) International application number: PCT/JP2014/068611
(87) International publication number: WO 2015/016047

(56) References cited:
- WO-A1-2013/015410
- WO-A1-2014/168062
- JP-A- S6 447 602
- JP-A- 2000 515 081
- JP-A- 2001 191 736
- US-A- 2 268 344
- US-A- 3 773 283

## Description

### Technical Field

The present invention relates to an aircraft tire.

### Background Art

Treads of aircraft tires are formed with plural circumferential direction grooves used for water drainage extending around the tire circumferential direction (for example, Japanese Patent Application Laid-Open (JP-A) No. 2007-168784).
Reference is also made to JP 2001-191736, which discloses an aircraft tire according to the preamble of Claim 1.

### SUMMARY OF INVENTION

### Technical Problem

However, in aircraft tires, since a large load is borne by the tread when the aircraft is landing and travelling on the ground, a restriction is sometimes set on the groove width and the groove depth of the circumferential direction grooves from the perspective of maintaining the rigidity of the tread.

An object of the present invention is to improve water drainage ability, while maintaining tread rigidity, of an aircraft tire.

### Solution to Problem

An aircraft tire of a first aspect of the present invention includes a tread provided at intervals along a tire width direction with a plurality of tire circumferential direction grooves that each extend along a tire circumferential direction with a plurality of recessed portions provided in a groove bottom at intervals around the tire circumferential direction, wherein, from among a plurality of land portions formed by the plurality of circumferential direction grooves, first recessed portions are disposed in circumferential direction grooves that form a land portion with a longest tire width direction length and second recessed portions are disposed in other of the circumferential direction grooves, there being more of the first recessed portions than the second recessed portions; characterised in that the first recessed portions extend from the groove bottom of the circumferential direction grooves to a height direction intermediate portion of at least one groove wall.

### Advantageous Effects of Invention

The aircraft tire of the present invention enables the water drainage ability to be improved, while maintaining the tread rigidity.

### BRIEF DESCRIPTION OF DRAWINGS

Fig. 1 is an opened out view of a tread, illustrating a tread pattern of an aircraft tire of a first reference embodiment, which is not according to the invention but which is useful for understanding the invention.
Fig. 2 is a cross-section along line 2X-2X in Fig. 1.
Fig. 3 is a cross-section along line 3X-3X in Fig. 2.
Fig. 4 is a cross-section of an exemplary embodiment which is a modified example of a recessed portion of the first reference embodiment, and which is according to the invention, sectioned along the tire width direction.
Fig. 5 is an opened out view of a tread, illustrating a tread pattern of an aircraft tire of a second exemplary embodiment.

### DESCRIPTION OF EMBODIMENTS

### First Reference Embodiment

Explanation follows regarding an aircraft tire of a first reference embodiment which is not according to the present invention but which can be modified to provide an aircraft tire according to the invention and which is accordingly useful for understanding the invention.

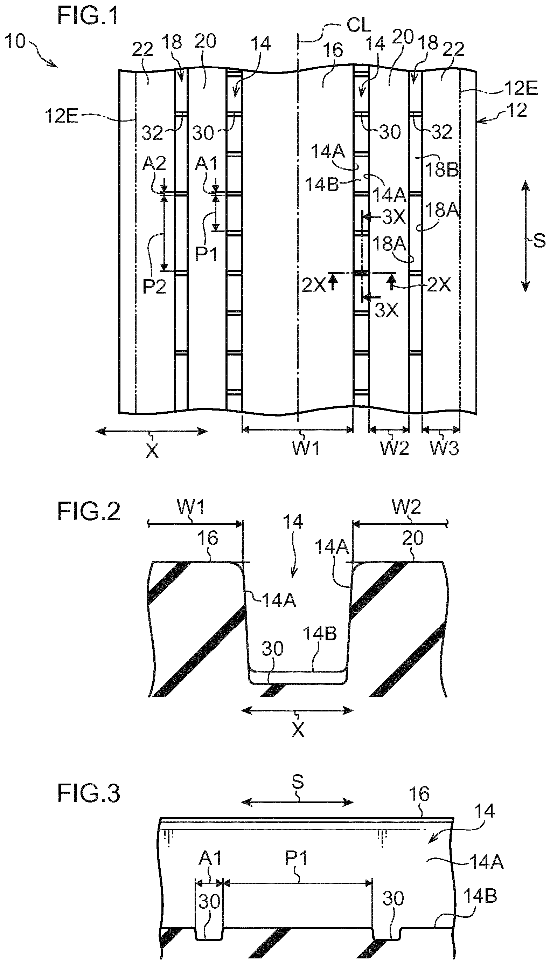

Fig. 1 is an opened out view illustrating a tread 12 of an aircraft tire (hereafter simply referred to as "tire") 10 of the first reference embodiment. Note that in Fig. 1, the arrow S indicates the circumferential direction of the tire 10 (hereafter referred to as "tire circumferential direction" as appropriate), and the arrow X indicates the tire width direction of the tire 10. The reference numeral CL indicates the equatorial plane of the tire 10 (hereafter referred to as "tire equatorial plane" as appropriate). Note that in the present reference embodiment, the side running along the tire width direction nearest to the tire equatorial plane CL is referred to as the "tire width direction inner sides", and the sides running along the tire width direction furthest from the tire equatorial plane CL are referred to as the "tire width direction outer sides".

The reference numerals 12E in Fig. 1 indicate ground contact edges of the tread 12. Note that "ground contact edges" referred to herein refers to the outermost ground contact points in the tire width direction when the tire is fitted to a normal rim (standard rim) according to the standards set out in the Tire and Rim Association Inc. (TRA) Year Book or the European Tyre and Rim Technical Organisation (ETRTO) Year Book, the tire is inflated to an internal pressure of the air pressure (standard internal pressure) corresponding to the maximum load (standard load) on a single wheel of the applicable size set out in the same standard, and applied with the standard load for a single wheel of the applicable size set out in the same standard.

In the tire 10 of the present reference embodiment, the same internal structure as a conventionally known aircraft tire may be employed as an internal structure. Explanation regarding the internal structure of the tire 10 is therefore omitted.

As illustrated in Fig. 1, the tread 12 configuring a ground contact location of the tire 10 with a road surface is respectively provided with first circumferential direction grooves 14 that each extend in a straight line around the tire circumferential direction on either tire width direction side of the tire equatorial plane CL, and is formed with a rib shaped first land portion 16 that is continuous around the tire circumferential direction between the pair of first circumferential direction grooves 14. Note that the first land portion 16 is formed on the tread 12 on the tire equatorial plane CL.

The tread 12 is also provided with second circumferential direction grooves 18 each extending in a straight line around the tire circumferential direction at the tire width direction outer sides of the first circumferential direction grooves 14, and is formed with rib shaped second land portions 20 that are each continuous around the tire circumferential direction between the respective first circumferential direction grooves 14 and second circumferential direction grooves 18.

Note that the first circumferential direction grooves 14 and the second circumferential direction grooves 18 of the present reference embodiment each extend in a straight line around the tire circumferential direction; however, the present invention is not limited to this configuration, and grooves may, for example, each extend in a zigzag shape or a wave shape around the tire circumferential direction. Moreover, the first circumferential direction grooves 14 and the second circumferential direction grooves 18 each have a fixed groove width (see Fig. 1); however, a groove width that is not fixed may be applied.

The tread 12 is also formed with rib shaped third land portions 22 that are each continuous around the tire circumferential direction at the tire width direction outer sides of the second circumferential direction grooves 18.

As illustrated in Fig. 1, a tire width direction length W1 of the first land portion 16 is wider than a tire width direction length W2 of each second land portion 20, and a tire width direction length W3 of each third land portion 22. Note that, in a tire width direction cross-section, the length W1 of the first land portion 16 is an average value of lengths measured along the tire width direction between intersection points of an extension line of a surface (tread face) 16A of the first land portion 16 and extension lines of side walls of the first land portion 16 (groove walls 14A at the first land portion 16 side of the first circumferential direction grooves 14). Similarly to the length W1 of the first land portion 16, in a tire width direction cross-section, the length W2 of each second land portion 20 is an average value of lengths measured along the tire width direction between intersection points of an extension line of a surface (tread face) 20A of the second land portion 20 and extension lines of side walls of the second land portion 20 (a groove wall 18A at the second land portion 20 side of the second circumferential direction groove 18). In a tire width direction cross-section, the length W3 of each third land portion 22 is an average value of lengths measured along the tire width direction from an intersection point between an extension line of a surface (tread face) 22A of the third land portion 22 and an extension line of a side wall of the third land portion 22 (a groove wall 18A at the third land portion 22 side of the second circumferential direction groove 18), as far as the ground contact edge 12E. Note that the first land portion 16 of the present reference embodiment is an example of a land portion of the present invention that has the longest tire width direction length, and the first circumferential direction grooves 14 are examples of circumferential direction grooves that form a land portion that has the longest tire width direction length in the present invention. The second circumferential direction grooves 18 are examples of other circumferential direction grooves of the present invention.

As illustrated in Fig. 1 and Fig. 3, plural first recessed portions 30 are provided at intervals around the tire circumferential direction to a groove bottom 14B of each first circumferential direction groove 14. As illustrated in Fig. 2, each first recessed portion 30 spans across between either groove wall 14A of the first circumferential direction groove 14. To explain specifically, the first recessed portion 30 extends in a straight line along the tire width direction from one groove wall 14A to the other groove wall 14A of the first circumferential direction groove 14, and forms a groove (a long, narrow indentation) shape with its length direction along the extension direction. Note that the extension direction of the first recessed portion 30 may be any direction, as long as this direction intersects the extension direction of the first circumferential direction grooves 14 (synonymous with the tire circumferential direction in the present reference embodiment). The first recessed portion 30 may be configured extending in a zigzag shape or a wave shape, for example, along this intersecting direction (the tire width direction in the present reference embodiment).

The depth of the first recessed portions 30 (a distance from the groove bottom 14B to the recess bottom) is substantially fixed at a length direction intermediate portion thereof, and is a smaller value than the depth of the first circumferential direction grooves 14 (a distance from a tread face of the tread 12 to the groove bottom 14B). Note that the depth of the first circumferential direction grooves 14 of the present reference embodiment is substantially fixed around the tire circumferential direction.

As illustrated in Fig. 1, plural second recessed portions 32 are provided at intervals around the tire circumferential direction to a groove bottom 18B of each second circumferential direction groove 18. Each second recessed portion 32 spans across between either groove wall 18A of the second circumferential direction groove 18. To explain specifically, the second recessed portion 32 extends in a straight line along the tire width direction from one groove wall 18A to the other groove wall 18A of the second circumferential direction groove 18, and forms a groove (a long, narrow indentation) shape with its length direction along the extension direction. Note that the extension direction of the second recessed portion 32 may be any direction, as long as this direction intersects the extension direction of the second circumferential direction grooves 18 (synonymous with the tire circumferential direction in the present reference embodiment). The second recessed portion 32 may be configured extending in a zigzag shape or a wave shape, for example, along this intersecting direction (the tire width direction in the present reference embodiment).

The depth of the second recessed portions 32 (a distance from the groove bottom 18B to the recess bottom) is substantially fixed at a length direction intermediate portion thereof, and is a smaller value than the depth of the second circumferential direction grooves 18 (a distance from the tread face of the tread 12 to the groove bottom 18B). Note that the depth of the second circumferential direction grooves 18 of the present reference embodiment is substantially fixed around the tire circumferential direction.

Note that the first recessed portions 30 of the present reference embodiment are examples of recessed portions provided to the circumferential direction grooves that form a land portion that has the longest tire width direction length in the present invention, and the second recessed portions 32 are examples of recessed portions provided to other circumferential direction grooves in the present invention.

As illustrated in Fig. 1, the number of first recessed portions 30 provided to each first circumferential direction groove 14 is greater than the number of second recessed portions 32 provided to each second circumferential direction groove 18. Note that in the present reference embodiment, a tire circumferential direction length A1 of the first recessed portions 30 is the same length as a tire circumferential direction length A2 of the second recessed portions 32. A tire circumferential direction length (interval) PI between adjacent first recessed portions 30 is thereby narrower than a tire circumferential direction length (interval) P2 between adjacent second recessed portions 32. Note that the present invention is not limited to the above configuration, and the tire circumferential direction length A1 of the first recessed portions 30 may be different to the tire circumferential direction length A2 of the second recessed portions 32. In a cross-section in a direction orthogonal to the extension direction (length direction) of the first recessed portion 30, the tire circumferential direction length A1 of the first recessed portion 30 is an average value of the lengths measured along a direction orthogonal to the extension direction of the first recessed portion 30 (the tire circumferential direction in the present reference embodiment) between intersection points of an extension line of the groove bottom 14B and extensions line of recessed walls of the first recessed portion 30. In a cross-section in a direction orthogonal to the extension direction (length direction) of the second recessed portion 32, the tire circumferential direction length A2 of the second recessed portion 32 is an average value of the lengths measured along a direction orthogonal to the extension direction of the second recessed portion 32 (the tire circumferential direction in the present reference embodiment) between intersection points of an extension line of the groove bottom 18B and extension lines of recessed walls of the second recessed portion 32.

Plural of the first recessed portions 30 are provided to the groove bottom 14B of each first circumferential direction groove 14, such that at least one first recessed portion 30 is present inside a ground contact region of the tread 12. Note that it is sufficient that the first recessed portions 30 are disposed at twelve or more locations around the circumference of the tire 10, and more preferably, at intervals of 2 cm to 3 cm around the tire circumferential direction. Note that the ground contact region of the tread 12 referred to herein refers to a ground contact region when a maximum load is applied in a state in which the tire 10 is inflated to an internal pressure of the air pressure corresponding to the maximum load on a single wheel of the applicable size under TRA standards or ETRTO standards.

As illustrated in Fig. 1, in the present reference embodiment, the first recessed portions 30 provided to one first circumferential direction groove 14 and the first recessed portions 30 of the other first circumferential direction groove 14 are aligned with each other along the tire width direction. Every other first recessed portion 30 among the plural first recessed portions 30 disposed at intervals around the tire circumferential direction is also aligned with the second recessed portions 32 along the tire width direction. Note that the present invention is not limited to this configuration, and configuration may be such that the first recessed portions 30 provided to the one first circumferential direction groove 14 and the first recessed portions 30 of the other first circumferential direction groove 14 are disposed offset around the tire circumferential direction without being aligned along the tire width direction, or such that the first recessed portions 30 and the second recessed portions 32 are disposed offset around the tire circumferential direction without being aligned along the tire width direction.

Note that in the tire 10 of the present reference embodiment, a tread pattern including the first recessed portions 30 and the second recessed portions 32 is configured with left-right symmetry with respect to the tire equatorial plane CL.

Explanation follows regarding operation and advantageous effects of the tire 10.

In the tire 10, the plural first recessed portions 30 are provided to the first circumferential direction grooves 14, thereby enabling the groove volume (water drainage capacity) of the first circumferential direction grooves 14 to be increased without increasing the overall groove width or groove depth of the first circumferential direction grooves 14. Moreover, plural second recessed portions 32 are provided to the second circumferential direction grooves 18, thereby enabling the groove volume (water drainage capacity) of the second circumferential direction grooves 18 to be increased without increasing the overall groove width or groove depth of the second circumferential direction grooves 18.

This enables the water drainage capacity of the first circumferential direction grooves 14 and the second circumferential direction grooves 18 to be increased, and the water drainage ability to be improved, while maintaining the rigidity of the tread 12 in the tire 10.

In particular, since a larger amount of drainage water flows into the first circumferential direction grooves 14, which form the first land portion 16 that has the longest tire width direction length, than into the second circumferential direction grooves 18, the water drainage ability of the tire 10 can be effectively improved by making the number of first recessed portions 30 provided to the first circumferential direction grooves 14 greater than the number of second recessed portions 32 provided to the second circumferential direction grooves 18.

When the aircraft is travelling on the ground, the tire 10 rolls along the pavement surface while supporting the weight of the aircraft body. When this occurs, shear strain around the tire circumferential direction occurs in the tread 12. This shear strain also occurs in the groove bottoms 14B of the first circumferential direction grooves 14 and the groove bottoms 18B of the second circumferential direction grooves 18, these being portions of the tread 12 that have the thinnest rubber thickness. However, the first recessed portions 30 and the second recessed portions 32 are respectively provided to the groove bottoms 14B, 18B, such that shear strain occurring in the respective groove bottoms 14B, 18B is absorbed by the first recessed portions 30 and the second recessed portions 32. This enables alleviation of excess strain occurring in the groove bottoms 14B of the first circumferential direction grooves 14 and the groove bottoms 18B of the second circumferential direction grooves 18.

In the tire 10, the first recessed portions 30 are provided to the groove bottoms 14B, and the second recessed portions 32 are provided to the groove bottoms 18B, such that the respective heat dissipating surface areas of the first circumferential direction grooves 14 and the second circumferential direction grooves 18 are increased. This enables an increase in the temperature of the groove bottoms 14B, 18B when the aircraft is travelling on the ground to be suppressed.

Each first recessed portion 30 spans across between either groove wall 14A of the first circumferential direction groove 14, such that the advantageous effects of groove volume, heat dissipating surface area, and absorption of shear strain in the first circumferential direction groove 14 are improved. The first recessed portion 30 extends from the one groove wall 14A to the other groove wall 14A of the first circumferential direction groove 14, and has a groove shape with its length direction along the extension direction. Thus the tire circumferential direction length A1 of the first recessed portion 30, this being a portion of the tread 12 that has the thinnest rubber thickness, can be made a smaller value than the tire width direction length of the first recessed portion 30, enabling a reduction in the rigidity of the tread 12 due to forming the first recessed portions 30 to be suppressed. Similarly, since each second recessed portion 32 spans across between either groove wall 18A of the second circumferential direction groove 18, the advantageous effects of groove volume, heat dissipating surface area, and absorption of shear strain in the second circumferential direction groove 18 are improved. Moreover, the second recessed portion 32 extends from one groove wall 18A to the other groove wall 18A of the second circumferential direction groove 18, and has a groove shape with its length direction along the extension direction. Thus the tire circumferential direction length A2 of the second recessed portion 32, this being a portion of the tread 12 that has the thinnest rubber thickness, can be made a smaller value than the tire width direction length of the second recessed portion 32, enabling a reduction in the rigidity of the tread 12 due to forming the second recessed portions 32 to be suppressed.

In the tire 10, the first land portion 16 formed on the tire equatorial plane CL is the land portion that has the longest tire width direction length, such that the first land portion 16 can sufficiently withstand load when travelling on the ground and when taking off.

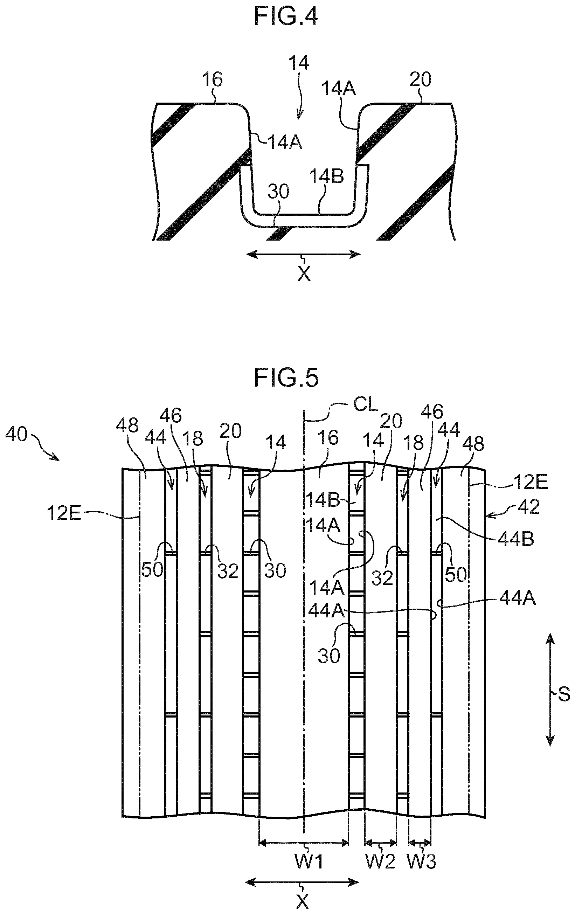

As illustrated in Fig. 2, in the tire 10 of the first reference embodiment, each first recessed portion 30 is provided inside the groove bottom 14B; however, according to the present invention recessed portions (here, the first recessed portion 30) extend from the groove bottom 14B to a height direction (land portion height direction) intermediate portion of at least one groove wall 14A. As in the first recessed portion 30 of a modified example (the first exemplary embodiment) illustrated in Fig. 4, for example, either length direction (extension direction) end of the first recessed portion 30 may extend from the groove bottom 14B to reach a midway portion of each groove wall 14A. Configuration may be such that one length direction end of the first recessed portion 30 extends from the groove bottom 14B across the groove wall 14A, and opens at the tread face of the first land portion 16. Note that the above configurations of the first recessed portions 30 may also be applied to the second recessed portions 32.

As illustrated in Fig. 2, in the tire 10 of the first reference embodiment, configuration is such that each first recessed portion 30 is provided to the groove bottom 14B so as to span between the groove walls 14A of the first circumferential direction groove 14; however, the present invention is not limited to this configuration. Configuration may be such that the first recessed portion 30 is only provided to a tire width direction intermediate portion of the groove bottom 14B, without spanning between the groove walls 14A. Note that the above configuration of the first recessed portions 30 may also be applied to the second recessed portions 32.

In the tire 10 of the present reference embodiment, the numbers of first recessed portions 30 provided to each of the pair of first circumferential direction grooves 14 is the same number; however, the present invention is not limited to this configuration. The numbers of first recessed portions 30 provided to each first circumferential direction groove 14 may be different, as long as these numbers are greater than the number of second recessed portions 32 provided to a single second circumferential direction groove.

As illustrated in Fig. 1, in the tire 10 of the first reference embodiment, two first circumferential direction grooves 14 and two second circumferential direction grooves 18 are provided to the tread 12; however, the present invention is not limited to this configuration. One or more circumferential direction grooves extending around the tire circumferential direction at the tire width direction outer sides of the second circumferential direction grooves 18 may be separately provided to the tread 12. For example, as in a tread 42 of a tire 40 of a second exemplary embodiment illustrated in Fig. 5, third circumferential direction grooves 44 (examples of other circumferential direction grooves in the present invention) may be provided extending in a straight line around the tire circumferential direction at the tire width direction outer sides of the second circumferential direction grooves 18. Third land portions 46 are formed to the tread 42 between the respective third circumferential direction grooves 44 and the second circumferential direction grooves 18, and fourth land portions 48 are formed at the tire width direction outer sides of the third circumferential direction grooves 44. A tire width direction length W3 of each third land portion 46 is narrower than the tire width direction length W2 of each second land portion 20. Note that the length W3 of the third land portions 46 in Fig. 5 is the tire width direction length measured by the same method employed for the first land portion 16 and the second land portions 20. Plural third recessed portions 50, with the same width as the second recessed portions 32, are provided at intervals around the tire circumferential direction to a groove bottom 44B of each third circumferential direction groove 44. Each third recessed portion 50 extends in a straight line along the tire width direction from one groove wall 44A to the other groove wall 44A of the third circumferential direction groove 44 and forms a groove (a long, narrow indentation) shape with its length direction along the extension direction. Note that the number of third recessed portions 50 provided to the third circumferential direction grooves 44 is smaller than the number of second recessed portions 32 provided to the second circumferential direction grooves 18.

Examples in the present invention have been explained above with reference to exemplary embodiments; however these exemplary embodiments are merely examples, and various modifications may be implemented within a range not departing from the spirit thereof. Obviously the scope of rights in the present invention is not limited to these exemplary embodiments.

### Test Example

In order to confirm the advantageous effects in the present invention, an aircraft tire of an Example, and aircraft tires of Comparative Examples that did not include the present invention, were prepared, and tests 1 to 3 below were performed. Note that the size of the sample aircraft tires was 1400×530R23.

Explanation first follows regarding the structure of each of the sample tires. Example: an aircraft tire with the same structure as the first reference embodiment.
Comparative Example 1: an aircraft tire with the same structure as the first reference embodiment, but in which recessed portions are not provided to the circumferential direction grooves.
Comparative Example 2: an aircraft tire with the same structure as the first reference embodiment, but in which the number of first recessed portions of the first circumferential direction grooves is the same as the number of second recessed portions of the second circumferential direction grooves.

Test 1: each sample tire was attached to a standard rim according to TRA standards, inflated with air until reaching a standard internal pressure set out in the same standards, then rolled long a wet road surface in a state applied with a specific load (100% of standard load), after which the brakes were applied and the braking distance until stopping was measured. This breaking distance indicates the water drainage ability of the sample tire. Note that in Table 1, the water drainage ability of each sample tire is shown as an index, where the braking distance (water drainage ability) of the Comparative Example 1 is set at 100. A higher value for the water drainage ability indicates a better result.
Test 2: each sample tire was attached to a standard rim according to TRA standards, inflated with air until reaching a standard internal pressure set out in the same standards, then rolled a specific distance along a drum of a drum test machine applied with a specific load (100% of standard load), after which the temperature of the groove bottoms of the circumferential direction grooves was measured at plural locations around the circumference, and an average value thereof was derived. Note that in Table 1, the groove bottom temperature of each sample tire is shown as an index, where the groove bottom temperature of the Comparative Example 1 is set at 100. A higher value for the groove bottom temperature indicates a better result.
Test 3: each sample tire was attached to a standard rim according to TRA standards, inflated with air until reaching a standard internal pressure set out in the same standards, then rolled along a dry road surface in a state applied with a specific load (100% of standard load), and the maximum value of strain occurring on the groove bottoms of the circumferential direction grooves when this was performed was measured. Note that in Table 1, the strain occurring on the groove bottoms (hereafter referred to as "groove bottom strain" as appropriate) of each sample tire is shown as an index, where the maximum value of the groove bottom strain of the Comparative Example 1 is set at 100. A higher value for the groove bottom strain indicates a better result.

**Table 1**

| | Comparative Example 1 | Comparative Example 2 | Example |
|---|---|---|---|
| Water drainage ability | 100 | 107 | 115 |
| Groove bottom temperature | 100 | 104 | 108 |
| Groove bottom strain | 100 | 105 | 110 |

Table 1 shows that the water drainage ability, and groove bottom temperature and groove bottom strain of the circumferential direction grooves were better in the aircraft tire of the Comparative Example 2, in which the recessed portions were provided to the circumferential direction grooves, than in the aircraft tire of the Comparative Example 1, in which recessed portions were not provided to the circumferential direction grooves.

Table 1 also shows that the water drainage ability, and groove bottom temperature and groove bottom strain of the circumferential direction grooves were superior in the aircraft tire of the Example compared to the aircraft tire of the Comparative Example 2. Namely, as in the aircraft tire of the Example, it was shown that water drainage ability, and groove bottom temperature and groove bottom strain of the circumferential direction grooves can be effectively improved by adopting a configuration in which more recessed portions are provided to the circumferential direction grooves that form the land portion which has the longest tire width direction length than to other circumferential direction grooves.

## Claims

1. An aircraft tire (10) comprising:
a tread (12) provided at intervals along a tire width direction (X) with a plurality of tire circumferential direction grooves (14, 18) that each extend along a tire circumferential direction (S) with a plurality of recessed portions (30, 32) provided in a groove bottom (14B, 18B) at intervals around the tire circumferential direction (S), wherein, from among a plurality of land portions (16, 20, 22) formed by the plurality of circumferential direction grooves (14, 18), more of the recessed portions (30) are disposed in circumferential direction grooves (14) that form a land portion (16) with a longest tire width direction length than in other of the circumferential direction grooves (18); **characterised in that**
recessed portions (30, 32) extend from the groove bottom (14B, 18B) of the circumferential direction grooves (14, 18) to a height direction intermediate portion of at least one groove wall (14A, 18A) of the circumferential direction grooves (14, 18).

2. The aircraft tire (10) of claim 1, wherein the recessed portions (30, 32) span between both groove walls (14A, 18A) of the circumferential direction groove (14, 18).

3. The aircraft tire (10) of claim 2, wherein
each of the recessed portions (30, 32) extends from one groove wall (14A, 18A) to the other groove wall (14A, 18A) of the circumferential direction groove (14, 18), and has a groove shape in which an extension direction is a length direction of the recessed portion (30, 32).

4. The aircraft tire (10) of any one of claim 1 to claim 3, wherein
the land portion (16) that has the longest tire width direction length is formed on the tread (12) on the tire equatorial plane (CL).

## Patentansprüche

1. Luftfahrzeugreifen (10), umfassend:
eine Lauffläche (12), die in Intervallen entlang einer Reifenbreitenrichtung (X) mit mehreren Reifenumfangsrichtungsrillen (14, 18) versehen ist, die sich jeweils entlang einer Reifenumfangsrichtung (S) mit mehreren ausgesparten Abschnitten (30, 32) erstrecken, die in einem Rillenboden (14B, 18B) in Intervallen um die Reifenumfangsrichtung (S) vorgesehen sind, wobei unter einer Vielzahl von Stegabschnitten (16, 20, 22), die durch die Vielzahl von Umfangsrichtungsrillen (14, 18) gebildet werden, mehr der ausgesparten Abschnitte (30) in Umfangsrichtungsrillen (14) angeordnet sind, die einen Stegabschnitt (16) mit einer längsten Reifenbreitenrichtungslänge bilden, als in anderen der Umfangsrichtungsrillen (18); **dadurch gekennzeichnet, dass**
vertiefte Abschnitte (30, 32) sich von dem Rillenboden (14B, 18B) der Umfangsrichtungsrillen (14, 18) zu einem Höhenrichtungszwischenabschnitt mindestens einer Rillenwand (14A, 18A) der Umfangsrichtungsrillen (14, 18) erstrecken.

2. Luftfahrzeugreifen (10) nach Anspruch 1, wobei sich die ausgesparten Abschnitte (30, 32) zwischen den beiden Rillenwänden (14A, 18A) der Umfangsrichtungsrille (14, 18) erstrecken.

3. Luftfahrzeugreifen (10) nach Anspruch 2, wobei
jeder der ausgesparten Abschnitte (30, 32) sich von einer Rillenwand (14A, 18A) zu der anderen Rillenwand (14A, 18A) der Umfangsrichtungsrille (14, 18) erstreckt und eine Rillenform aufweist, in der eine Ausdehnungsrichtung eine Längenrichtung des ausgesparten Abschnitts (30, 32) ist.

4. Luftfahrzeugreifen (10) nach einem der Ansprüche 1 bis 3, wobei
der Stegabschnitt (16), der die längste Reifenbreitenrichtungslänge aufweist, auf der Lauffläche (12) auf der Reifenäquatorialebene (CL) ausgebildet ist.

## Revendications

1. Pneumatique d'aéronef (10) comprenant :
une bande de roulement (12) pourvue à intervalles le long d'une direction de largeur du pneumatique (X) d'une pluralité de rainures de direction circonférentielle du pneumatique (14, 18) dont chacune s'étend le long d'une direction circonférentielle du pneumatique (S) avec une pluralité de parties évidées (30, 32) fournies dans un fond de rainure (14B, 18B), à intervalles autour de la direction circonférentielle du pneumatique (S), dans lequel, parmi une pluralité de parties de portée (16, 10, 22) formées par la pluralité de rainures de direction circonférentielle (14, 18), davantage de parties de portée (30) sont agencées dans des rainures de direction circonférentielle (14) formant une partie de portée (16) avec une longueur de direction de largeur du pneumatique la plus longue que dans d'autres rainures de direction circonférentielle (18) ; **caractérisé en ce que**
des parties évidées (30, 32) s'étendent depuis le fond de la rainure (14B, 18B) des rainures de direction circonférentielle (14, 18) vers une partie intermédiaire de direction de hauteur d'au moins une paroi de rainure (14A, 18A) des rainures de direction circonférentielle (14, 18).

2. Pneumatique d'aéronef (10) selon la revendication 1, dans lequel les parties évidées (30, 32) s'étendent entre les deux parois de rainure (14A, 18A) de la rainure de direction circonférentielle (14, 18).

3. Pneumatique d'aéronef (10) selon la revendication 2, dans lequel
chacune des parties évidées (30, 32) s'étend depuis une paroi de rainure (14A, 18A) vers l'autre paroi de rainure (14A, 18A) de la rainure de direction circonférentielle (14, 18), et a une forme de rainure dans laquelle une direction d'extension est une direction de longueur de la partie évidée (30, 32).

4. Pneumatique d'aéronef (10) selon l'une quelconque des revendications 1 à 3, dans lequel
la partie de portée (16) ayant la plus longue longueur de direction de largeur du pneumatique est formée sur la bande de roulement (12) sur le plan équatorial du pneumatique (CL).
